(19) **Europäisches Patentamt**

**European Patent Office**

**Office européen des brevets**

(11) **EP 0 668 319 B1**

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(51) Int Cl.⁶: **C08L 55/02**

(21) Anmeldenummer: **95101417.4**

(22) Anmeldetag: **02.02.1995**

(54) **Matte ABS-Polymer-Zusammensetzungen**

Matt ABS polymer compositions

Composition de polymère ABS mattes

(84) Benannte Vertragsstaaten:
**DE ES FR IT NL**

(30) Priorität: **15.02.1994 DE 4404750**

(43) Veröffentlichungstag der Anmeldung:
**23.08.1995 Patentblatt 1995/34**

(73) Patentinhaber: **BAYER AG**
**51368 Leverkusen (DE)**

(72) Erfinder:
• **Eichenauer, Herbert, Dr.**
  **D-41539 Dormagen (DE)**
• **Leitz, Edgar, Dr.**
  **D-41541 Dormagen (DE)**
• **Piejko, Karl-Erwin, Dr.**
  **D-51467 Bergisch Gladbach (DE)**
• **Frohberg, Ekkehard, Dr.**
  **D-50767 Köln (DE)**

(56) Entgegenhaltungen:
**EP-A- 0 002 961          EP-A- 0 139 271**
**EP-A- 0 315 490**

• **PATENT ABSTRACTS OF JAPAN vol. 6, no. 174 (C-123) 8. September 1982 & JP-A-57 087 448 (DAICEL CHEM. IND. LTD) 31. Mai 1982**

**Beschreibung**

Die Erfindung betrifft ABS-Polymerisate mit gleichmäßiger matter Oberfläche bei gleichzeitiger hoher Zähigkeit und hohem Elastizitätsmodul. ABS-Polymerisate mit matter Oberfläche und hohem Elastizitätsmodul sind bekannt und z.B. in EP-A 295 517 und in EP-A 306 103 beschrieben.

Ein Nachteil dieser matten ABS-Systeme ist jedoch, daß bei der Spritzgußverarbeitung in der Regel keine gleichmäßig matten Formteiloberflächen erhalten werden und die Polymerisate nur mittlere Zähigkeitswerte aufweisen.

Es bestand daher für die Herstellung von Formteilen, insbesondere von Platten, Bedarf an ABS-Polymer-Zusammensetzungen, die die obengenannten Eigenschaftsanforderungen (gleichmäßige Mattigkeit, hohe Zähigkeit, hoher E-Modul) erfüllen.

Es wurde nun gefunden, daß solche ABS-Polymerisate aus ganz speziellen Einzelkomponenten erhalten werden können, wenn genau definierte Randbedingungen bzw. Mengenverhältnisse eingehalten werden.

Gegenstand der Erfindung sind ABS-Polymer-Zusammensetzungen bestehend aus:

A) 5 bis 90 Gew.-Teilen, vorzugsweise 10 bis 75 Gew.-Teilen und besonders bevorzugt 15 bis 60 Gew.-Teilen, mindestens eines durch Masse- oder Lösungspolymerisation hergestellten ABS-Polymeren mit einem mittleren Teilchendurchmesser der Kautschukteilchen von 800 bis 15 000 nm, vorzugsweise von 1 000 bis 10 000 nm und besonders bevorzugt von 1 200 bis 5 000 nm und einem Kautschukgehalt von 1 bis 20 Gew.-%, vorzugsweise von 5 bis 15 Gew.-% und besonders bevorzugt von 7,5 bis 12,5 Gew.-%,

B) 1 bis 50 Gew.-Teilen, vorzugsweise 5 bis 40 Gew.-Teilen und besonders bevorzugt 10 bis 35 Gew.-Teilen, mindestens eines durch Emulsionspolymerisation hergestellten ABS-Polymeren mit einem mittleren Teilchendurchmesser von 50 bis 500 nm, vorzugsweise von 100 bis 450 nm und besonders bevorzugt von 200 bis 400 nm, mit einem Kautschukgehalt von 20 bis 80 Gew.-%, vorzugsweise von 30 bis 70 Gew.-% und besonders bevorzugt von 35 bis 65 Gew.-%,

C) 1 bis 20 Gew.-Teilen, vorzugsweise 2,5 bis 15 Gew.-Teilen und besonders bevorzugt 5 bis 12,5 Gew.-Teilen, mindestens eines säuremodifizierten ABS-Polymerisates mit einem Kautschukgehalt von 30 bis 75 Gew.-%, vorzugsweise von 35 bis 70 Gew.-% und besonders bevorzugt von 40 bis 60 Gew.-% und einem Gehalt an einpolymerisierten Carboxylgruppen (-COOH) von 0,5 bis 7,5 Gew.-%, vorzugsweise von 1 bis 6,5 Gew.-% und besonders bevorzugt von 1,5 bis 5 Gew.-% und

D) 0 bis 70 Gew.-Teilen, vorzugsweise 5 bis 60 Gew.-Teilen und besonders bevorzugt 10 bis 50 Gew.-Teilen, mindestens eines thermoplastischen Vinylharzes hergestellt durch radikalische Polymerisation von mindestens zwei Monomerkomponenten ausgewählt aus Styrol, α-Methylstyrol, Methylmethacrylat, Acrylnitril, N-Phenylmaleinimid.

Als Pfropfgrundlage für die ABS-Polymerisate A), B) und C) kommen praktisch alle Kautschuke mit Glasübergangstemperaturen ≤0°C in Frage. Beispiele sind Polybutadien, Polyisopren, Styrol-Butadien-Copolymerisate, Acrylnitril-Butadien-Copolymerisate, Acrylatkautschuke (gegebenenfalls mit Kern/Schalen-Struktur), EPM-Kautschuke (Ethylen/Propylen-Kautschuke) und EPDM-Kautschuke (Ethylen/Propylen/Dien-Kautschuke, die als Dien ein nichtkonjugiertes Dien wie z.B. Hexadien-1,5 oder Norbornadien in kleinen Mengen enthalten). Bevorzugter Kautschuk zur Herstellung der ABS-Polymere A, B und C ist Polybutadien.

Als Pfropfmonomere für die ABS-Polymerisate A) und B) werden Kombinationen von mindestens zwei Monomeren ausgewählt aus Styrol, α-Methylstyrol, Methylmethacrylat, Acrylnitril, N-Phenylmaleinimid eingesetzt, bevorzugt werden Styrol/Acrylnitril-Gemische, α-Methylstyrol/Acrylnitril-Gemische und Styrol/α-Methylstyrol/Acrylnitril-Gemische.

Als Pfropfmonomere für das ABS-Polymerisat C) werden auch die unter A) und B) beschriebenen Kombinationen eingesetzt, zusätzlich werden Monomere mit Carboxylgruppen, z.B. Acrylsäure, Methacrylsäure, Maleinsäure, Fumarsäure, vorzugsweise Acrylsäure und/oder Methacrylsäure, verwendet.

Die erfindungsgemäß einzusetzende Komponente A ist bekannt; ihre Herstellung erfolgt durch Massepolymerisation oder Lösungspolymerisation und ist z.B. in US-PS 4 012 462, US-PS 4 362 850 oder EP-A 67 536 beschrieben.

Die ABS-Kautschukteilchen der Komponente A sind wenigstens teilweise vernetzt und müssen mittlere Teilchendurchmesser $d_{50}$ (bestimmt durch Ausmessung elektronenmikroskopischer Aufnahmen) von 800 bis 15 000 nm, vorzugsweise von 1 000 bis 10 000 nm und besonders bevorzugt von 1 200 bis 5 000 nm, aufweisen. Die Kautschukgehalte des ABS-Polymeren A liegen zwischen 1 und 20 Gew.-%, vorzugsweise zwischen 5 und 15 Gew.-% und besonders bevorzugt zwischen 7,5 und 12,5 Gew.-%

Das Gewichtsverhältnis an eingebautem Styrol und gegebenenfalls eingebautem α-Methylstyrol zu sonstigen eingebauten Comonomeren liegt in Komponente A vorzugsweise bei 70:30 bis 80:20, besonders bevorzugt bei 75:25 bis 78:22.

Die erfindungsgemäß einzusetzenden Komponenten B und C sind bekannt; ihre Herstellung erfolgt durch radikalische Emulsionspolymerisation der obengenannten Monomeren in Gegenwart eines in Latexform vorliegenden Kautschuks und ist z.B. in EP-A 212 123 beschrieben.

Die Emulsions-ABS-Kautschukteilchen der Komponente B sind wenigstens teilweise vernetzt und müssen mittlere Teilchendurchmesser $d_{50}$ (bestimmt durch Ultrazentrifugenmessung, vgl. W. Scholtan, H. Lange in Kolloid-Z. u. Z. Polymere 250, S. 782-796 (1972)) von 50 bis 500 nm, vorzugsweise von 100 bis 450 nm und besonders bevorzugt von 200 bis 400 nm, besitzen.

Die Kautschukgehalte der Komponente B liegen zwischen 20 und 80 Gew.-%, vorzugsweise von 30 bis 70 Gew.-% und besonders bevorzugt von 35 bis 65 Gew.-%.

Das Gewichtsverhältnis an eingebautem Styrol und gegebenenfalls eingebautem $\alpha$-Methylstyrol zu sonstigen eingebauten Comonomeren liegt in Komponente B vorzugsweise bei 70:30 bis 80:20, besonders bevorzugt bei 71:29 bis 74:26.

Die erfindungsgemäß einzusetzenden säuremodifizierten ABS-Polymerisate C besitzen einen Kautschukgehalt von 30 bis 75 Gew.-%, vorzugsweise 35 bis 70 Gew.-% und besonders bevorzugt von 40 bis 60 Gew.-% und einem Gehalt an einpolymerisierten Carboxylgruppen (-COOH) von 0,5 bis 7,5 Gew.-%, vorzugsweise von 1 bis 6,5 Gew.-% und besonders bevorzugt von 1,5 bis 5 Gew.-%.

Die erfindungsgemäß gegebenenfalls einzusetzende thermoplastische Vinylharz-Komponente D ist bekannt; ihre Herstellung erfolgt durch radikalische Polymerisation der obengenannten Monomeren, wobei die Synthese durch Emulsions-, Suspensions-, Lösungs- oder Massepolymerisation durchgeführt werden kann, bevorzugt sind die beiden letztgenannten Verfahren, vgl. z.B. DE-A 3 334 338 und EP-A 255 889. Die Molekulargewichte der Vinylharz-Komponente C sind in weiten Grenzen variierbar ($\overline{M}_w$ ca. 50 000 bis 150 000), bevorzugt sind Copolymerisate aus Styrol und Acrylnitril, aus $\alpha$-Methylstyrol und Acrylnitril sowie Terpolymerisate aus Styrol, $\alpha$-Methylstyrol und Acrylnitril.

Die erfindungsgemäßen ABS-Polymer-Zusammensetzungen können erhalten werden, indem man ihre Bestandteile A, B, C und gegebenenfalls D miteinander bei höherer Temperatur, insbesondere bei T = 100°C bis 280°C, z.B. in Knetern, auf Walzenstühlen oder Schneckenmaschinen vermischt.

Den Zusammensetzungen können übliche Additive wie z.B. Antioxidantien, Alterungsschutzmittel, Gleitmittel, Flammschutzmittel, Füllstoffe, Pigmente, Antistatika in den üblichen Mengen zugesetzt werden.

Die erfindungsgemäßen Zusammensetzungen sind thermoplastische Formmassen mit guter Zähigkeit und hohem Elastizitätsmodul, die bei Verarbeitung durch z.B. Extrusion, Kalandrierung und Spritzgießen, vorzugsweise bei der Plattenextrusion, zu Formteilen mit gleichmäßiger matter Oberfläche führen.

**Beispiele und Vergleichsbeispiele**

Eingesetzte Polymerisate

A: Masse-ABS-Polymerisat mit einem mittleren Teilchendurchmesser der Kautschukteilchen von ca. 1 300 nm und einem Kautschukgehalt von ca. 11 Gew.-% (Magnum 3504, DOW).

B: Emulsions-ABS-Polymerisat bestehend aus 55 Gew.-% Polybutadien mit einem mittleren Teilchendurchmesser ($d_{50}$) von 395 nm als Pfropfgrundlage, auf die 45 Gew.-% eines Styrol/Acrylnitril-Gemisches (Gew.-Verhältnis Styrol:Acrylnitril =72:28) aufgepfropft werden.

C: Säuremodifiziertes ABS-Polymerisat bestehend aus 55 Gew.-% Polybutadien mit einem mittleren Teilchendurchmesser $d_{50}$ von 420 nm als Pfropfgrundlage, auf die 45 Gew.-% eines Styrol/Acrylnitril/Methacrylsäure-Gemisches (Gew.-Verhältnis Styrol:Acrylnitril:Methacrylsäure= 27,4:10,6:7) aufgepfropft werden (Gehalt an einpolymerisierten Carboxylgruppen 3,6 Gew.-%).

D: Styrol/Acrylnitril-Copolymerisat aus 72 Gew.-% Styrol und 28 Gew.-% Acrylnitril mit einem Molekulargewicht (Gewichtsmittel) $\overline{M}_w$ von ca. 80 000 und einer molekularen Uneinheitlichkeit $U = \overline{M}_w/\overline{M}_n$ -1≤2.

E: Hydrophobierte Kieselsäure.

Die in Tabelle 1 angegebenen Mengen der Komponenten A bis D wurden in einem Innenkneter bei 180°C bis 200°C zusammen mit 2 Teilen Pentaerythrittetrastearat vermischt und anschließend durch Spritzgießen zu Normstäben und einer Platte (zur Oberflächenbeurteilung) sowie durch Extrusion zu einer Platte verarbeitet.

Die Kerbschlagzähigkeit $a_k$ wurde nach ISO 180/1A (Einheit: $kJ/m^2$), der Elastizitätsmodul (Biege-E-Modul) nach DIN 53 457 und der Oberflächenglanz nach DIN 67 530 an einer ebenen Platte bei einem Reflektionswinkel von 60° (Reflektometerwert) ermittelt.

Die resultierenden Werte sind ebenfalls in Tabelle 1 zusammengestellt; daraus ist ersichtlich, daß nur die erfindungsgemaßen ABS-Polymer-Zusammensetzungen eine optimale Kombination aus guter Zähigkeit, gutem Elastizitätsmodul (als Kriterium wurde hierbei ein Biege-E-Modul von $>1\,900 N/mm^2$ entsprechend einem für Plattenkonstruktionen oft geforderten Zug-E-Modul $>2\,000\ N/mm^2$ gewählt) und sehr guter gleichmäßiger Mattigkeit der Formteiloberfläche aufweisen.

## Tabelle 1

## Zusammensetzungen und Prüfdaten der hergestellten ABS-Polymer-Zusammensetzungen

| | Zusammensetzungen | | | | | Prüfdaten | | | |
|---|---|---|---|---|---|---|---|---|---|
| Bei-spiel | A Gew.-Teile | B Gew.-Teile | C Gew.-Teile | D Gew.-Teile | E Gew.-Teile | $a_k$ $(kJ/m^2)$ | Biege-E-Modul $(N/mm^2)$ | Reflek-tome-ter-wert | Beurteilung an extrudierter Platte |
| 1 | 20 | 31 | 5 | 44 | - | 23 | >1900 | 30 | gleichmä-ßig matt |
| 2 | 20 | 28,5 | 7,5 | 44 | - | 21 | >1900 | 10 | gleichmä-ßig matt |
| 3 | 50 | 12,5 | 7,5 | 30 | - | 33 | >1900 | 3 | gleichmä-ßig matt |
| 4 | 70 | 20 | 7,5 | - | - | 38 | >1900 | 13 | gleichmä-ßig matt |
| 5 (Vgl.) | 100 | - | - | - | - | 21 | >1900 | 40 | ungleich-mäßig matt |
| 6 (Vgl.) | 20 | 36 | - | 44 | - | 22 | ⟨1900 | 42 | glanz-reduziert |
| 7 (Vgl.) | - | 35 | - | 64 | 1 | 14 | >1900 | 35 | fleckig matt |

**Patentansprüche**

1. ABS-Polymer-Zusammensetzungen bestehend aus:

A) 5 bis 90 Gew.-Teilen mindestens eines durch Masse- oder Lösungs-polymerisation hergestellten ABS-Polymeren mit einem mittleren Teilchendurchmesser der wenigstens teilweise vernetzten Kautschukteilchen von 800 bis 15 000 nm und einem Kautschukgehalt von 1 bis 20 Gew.-%,

B) 1 bis 50 Gew.-Teilen mindestens eines durch Emulsionspolymerisation hergestellten ABS-Polymeren mit einem mittleren Teilchendurchmesser von 50 bis 500 nm mit einem wenigstens teilweise vernetzten Kautschukgehalt von 20 bis 80 Gew.-%,

C) 1 bis 20 Gew.-Teilen mindestens eines säuremodifizierten ABS-Polymerisates mit einem Kautschukgehalt von 30 bis 75 Gew.-% und einem Gehalt an einpolymerisierten Carboxylgruppen (-COOH) von 0,5 bis 7,5 Gew.-% und

D) 0 bis 70 Gew.-Teilen mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid.

2. ABS-Polymer-Zusammensetzungen bestehend aus:

A) 10 bis 75 Gew.-Teilen mindestens eines durch Masse- oder Lösungspolymerisation hergestellten ABS-Polymeren mit einem mittleren Teilchendurchmesser der wenigstens teilweise vernetzten Kautschukteilchen von 1 000 bis 10 000 nm und einem Kautschukgehalt von 5 bis 15 Gew.-%,

B) 5 bis 40 Gew.-Teilen mindestens eines durch Emulsionspolymerisation hergestellten ABS-Polymeren mit einem mittleren Teilchendurchmesser von 100 bis 450 nm mit einem wenigstens teilweise vernetzten Kautschukgehalt von 30 bis 70 Gew.-%,

C) 2,5 bis 15 Gew.-Teilen mindestens eines säuremodifizierten ABS-Polymerisates mit einem Kautschukgehalt von 35 bis 70 Gew.-% und einem Gehalt an einpolymerisierten Carboxylgruppen (-COOH) vonl bis 6,5 Gew.-% und

D) 5 bis 60 Gew.-Teilen mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid.

3. ABS-Polymer-Zusammensetzungen bestehend aus:

A) 15 bis 60 Gew.-Teilen mindestens eines durch Masse- oder Lösungspolymerisation hergestellten ABS-Polymeren mit einem mittleren Teilchendurchmesser der wenigstens teilweise vernetzten Kautschukteilchen von 1 200 bis 5 000 nm und einem Kautschukgehalt von 7,5 bis 12,5 Gew.-%,

B) 10 bis 35 Gew.-Teilen mindestens eines durch Emulsionspolymerisation hergestellten ABS-Polymeren mit einem mittleren Teilchendurchmesser von 200 bis 400 nm mit einem wenigstens teilsweise vernetzten Kautschukgehalt von 35 bis 65 Gew.-%,

C) 5 bis 12,5 Gew.-Teilen mindestens eines säuremodifizierten ABS-Polymerisates mit einem Kautschukgehalt von 40 bis 60 Gew.-% und einem Gehalt an einpolymerisierten Carboxylgruppen (-COOH) von 1,5 bis 5 Gew.-% und

D) 10 bis 50 Gew.-Teilen mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid.

4. Verwendung der ABS-Polymer-Zusammensetzungen gemäß Ansprüchen 1 bis 3 zur Herstellung von Formkörpern.

5. Verwendung der ABS-Polymer-Zusammensetzungen gemäß Ansprüchen 1 bis 3 bei der Plattenextrusion.

**Claims**

1. ABS polymer compositions consisting of:

A) 5 to 90 parts by weight of at least one ABS polymer produced by bulk or solution polymerisation having a mean particle diameter of the at least partially crosslinked rubber particles of 800 to 15000 nm and a rubber content of 1 to 20 wt.%,

B) 1 to 50 parts by weight of at least one ABS polymer produced by emulsion polymerisation having a mean particle diameter of 50 to 500 nm and an at least partially crosslinked rubber content of 20 to 80 wt.%,

C) 1 to 20 parts by weight of at least one acid-modified ABS polymer having a rubber content of 30 to 75 wt. % and a copolymerised carboxyl group (-COOH) content of 0.5 to 7.5 wt.% and

D) 0 to 70 parts by weight of at least one thermoplastic vinyl resin produced by free-radical polymerisation of at least two monomer components selected from styrene, $\alpha$-methylstyrene, methyl methacrylate, acrylonitrile, N-phenylmaleimide.

2. ABS polymer compositions consisting of:

A) 10 to 75 parts by weight of at least one ABS polymer produced by bulk or solution polymerisation having a mean particle diameter of the at least partially crosslinked rubber particles of 1000 to 10000 nm and a rubber content of 5 to 15 wt.%,

B) 5 to 40 parts by weight of at least one ABS polymer produced by emulsion polymerisation having a mean particle diameter of 100 to 450 nm and an at least partially crosslinked rubber content of 30 to 70 wt.%,

C) 2.5 to 15 parts by weight of at least one acid-modified ABS polymer having a rubber content of 35 to 70 wt.% and a copolymerised carboxyl group (-COOH) content of 1 to 6.5 wt.% and

D) 5 to 60 parts by weight of at least one thermoplastic vinyl resin produced by free-radical polymerisation of at least two monomer components selected from styrene, $\alpha$-methylstyrene, methyl methacrylate, acrylonitrile, N-phenylmaleimide.

3. ABS polymer compositions consisting of:

A) 15 to 60 parts by weight of at least one ABS polymer produced by bulk or solution polymerisation having a mean particle diameter of the at least partially crosslinked rubber particles of 1200 to 5000 nm and a rubber content of 7.5 to 12.5 wt.%,

B) 10 to 35 parts by weight of at least one ABS polymer produced by emulsion polymerisation having a mean particle diameter of 200 to 400 nm and an at least partially crosslinked rubber content of 35 to 65 wt.%,

C) 5 to 12.5 parts by weight of at least one acid-modified ABS polymer having a rubber content of 40 to 60 wt.% and a copolymerised carboxyl group (-COOH) content of 1.5 to 5 wt.% and

D) 10 to 50 parts by weight of at least one thermoplastic vinyl resin produced by free-radical polymerisation of at least two monomer components selected from styrene, $\alpha$-methyl-styrene, methyl methacrylate, acrylonitrile, N-phenylmaleimide.

4. Use of the ABS polymer compositions according to claims 1 to 3 for the production of mouldings.

5. Use of the ABS polymer compositions according to claims 1 to 3 for sheet extrusion.

**Revendications**

1. Compositions polymères ABS consistant en :

A) 5 à 90 parties en poids d'au moins un polymère ABS préparé par polymérisation en masse ou en solution, à un diamètre moyen des particules du caoutchouc, réticulées en partie au moins, de 800 à 15 000 nm et une teneur en caoutchouc de 1 à 20 % en poids,
B) 1 à 50 parties en poids d'au moins un polymère ABS préparé par polymérisation en émulsion, à un diamètre moyen de particule de 50 à 500 nm et une teneur en caoutchouc, réticulé en partie au moins, de 20 à 80 % en poids,

C) 1 à 20 parties en poids d'au moins un polymère ABS à modification acide, une teneur en caoutchouc de 30 à 75 % en poids et une teneur en groupes carboxyle polymérisés (-COOH) de 0,5 à 7,5 % en poids, et

D) 0 à 70 parties en poids d'au moins une résine thermoplastique vinylique préparée par polymérisation radicalaire d'au moins deux composants monomères choisis parmi le styrène, l'a-méthylstyrène, le méthacrylate de méthyle, l'acrylonitrile, le N-phénylmaléimide.

2. Compositions polymères ABS consistant en :

A) 10 à 75 parties en poids d'au moins un polymère ABS préparé par polymérisation en masse ou en solution, à un diamètre moyen des particules de caoutchouc, réticulées en partie au moins, de 1 000 à 10 000 nm et une teneur en caoutchouc de 5 à 15 % en poids,

B) 5 à 40 parties en poids d'au moins un polymère ABS préparé par polymérisation en émulsion, à un diamètre moyen de particule de 100 à 450 nm et une teneur en caoutchouc, réticulé en partie au moins, de 30 à 70 % en poids,

C) 2,5 à 15 parties en poids d'au moins un polymère ABS à modification acide, à une teneur en caoutchouc de 35 à 70 % en poids et une teneur en groupes carboxyle polymérisés (-COOH) de 1 à 6,5 % en poids, et

D) 5 à 60 parties en poids d'au moins une résine thermoplastique vinylique préparée par polymérisation radicalaire d'au moins deux composants monomères choisis parmi le styrène, l'$\alpha$-méthylstyrène, le méthacrylate de méthyle, l'acrylonitrile, le N-phénylmaléimide.

3. Compositions polymères ABS consistant en :

A) 15 à 60 parties en poids d'au moins un polymère ABS préparé par polymérisation en masse ou en solution, à un diamètre moyen des particules du caoutchouc, réticulées en partie au moins, de 1 200 à 5 000 nm et une teneur en caoutchouc de 7,5 à 12,5 % en poids,

B) 10 à 35 parties en poids d'au moins un polymère ABS préparé par polymérisation en émulsion, à un diamètre de particule moyen de 200 à 400 nm et une teneur en caoutchouc, réticulé en partie au moins, de 35 à 65 % en poids,

C) 5 à 12,5 parties en poids d'au moins un polymère ABS modification acide, à une teneur en caoutchouc de 40 à 60 % en poids et une teneur en groupes carboxyle polymérisés (-COOH) de 1,5 à 5 % en poids, et

D) 10 à 50 parties en poids d'au moins une résine thermoplastique vinylique préparée par polymérisation radicalaire d'au moins deux composants monomères choisis parmi le styrène, l'a-méthylstyrène, le méthacrylate de méthyle, l'acrylonitrile, le N-phénylmaléimide.

4. Utilisation des compositions polymères ABS selon les revendications 1 à 3 pour la fabrication d'objets moulés.

5. Utilisation des compositions polymères ABS selon les revendications 1 à 3 pour l'extrusion de plaques.